# EUROPEAN PATENT SPECIFICATION

(11) **EP 2 799 278 B1**
(45) Date of publication and mention of the grant of the patent: **02.10.2019**
(21) Application number: 12863961.4
(22) Date of filing: 26.12.2012
(51) Int. Cl.: B60N 2/28, B60N 2/68

(54) **VEHICLE SEAT**
FAHRZEUGSITZ
SIÈGE DE VÉHICULE

(30) Priority: 27.12.2011 JP 2011286049
(43) Date of publication of application: 05.11.2014
(73) Proprietor: Volkswagen Aktiengesellschaft, 38440 Wolfsburg (DE)
(72) Inventor: KIKUCHI, Kenta, Shioya-gun Tochigi 329-1217 (JP)
(74) Representative: Löbbecke, Carsten
(86) International application number: PCT/JP2012/083711
(87) International publication number: WO 2013/099975

(56) References cited:
- EP-A2- 0 901 935
- FR-A1- 2 912 964
- FR-A1- 2 917 023
- JP-A- 2002 104 036
- JP-A- 2002 211 287
- JP-A- 2003 048 467
- JP-A- 2003 312 335
- JP-A- 2004 042 860
- JP-U- S5 885 537
- US-A- 6 000 737

## Description

### Technical Field

The present invention relates to a vehicle seat, and particularly, to a vehicle seat including a fixing mechanism which is placed on a child seat so as to fix the child seat and a seat back frame which supports the fixing mechanism.

### Background Art

Among vehicle seats, there is known a vehicle seat including a mechanism (hereinafter, referred to as a fixing mechanism) that fixes a child seat placed on a seat cushion. The fixing mechanism includes an anchor member that engages with an engagement portion extending from the child seat. Further, in the vehicle seat including the fixing mechanism, the anchor member may be attached to a seat frame through an anchor attachment member such as a bracket (for example, see Patent Document 1). In the vehicle seat disclosed in Patent Document 1, a striker engaging with a fixed arm extending from the child seat is provided as the anchor member, and the striker is attached to a seat cushion frame through a bracket. The Patent Document 2 disclosed a mounting structure for a child seat. Through holes are formed on a lower connecting member of a seat back frame, and a female screw member coinciding with each through hole in axis is provided. In a mounting plate part of a tether anchor, bolt insertion holes are formed. By fastening a bolt passed through the bolt insertion holes and the through holes and screwed onto a screw hole of the female screw member, the mounting plate part is fixed to the lower connecting member and thereby the tether anchor is mounted on the seat back frame.

### CITATION LIST

### Patent Documents

Patent Document 1: JP 2001-105941 A; Patent Document 2: JP 2003 048467 A.

### SUMMARY OF THE INVENTION

### Problem to be solved by the Invention

Incidentally, it is considered that the anchor members are provided in the vehicle seat as many as the engagement portions as a plurality of engagement portions are provided in the child seat from the purpose of more rigidly fixing the child seat to the vehicle seat. In the case where the plurality of anchor members are provided in the vehicle seat, the anchor members are generally disposed at different positions. In such a configuration, it is difficult to keep the anchor members at predetermined arrangement positions when the rigidity of a portion for fixing the anchor attachment member in the frame is low in the case where the anchor members are attached to the seat frame through the anchor attachment member such as a bracket as described above. As a result, the engagement portions provided in the child seat do not appropriately engage with the anchor members, and hence there is a concern that the child seat is not satisfactorily fixed to the vehicle seat.

Therefore, the present invention is made in view of the above-described circumstances, and an object thereof is to realize a vehicle seat capable of satisfactorily attaching anchor members to a seat back frame even if a plurality of anchor members are provided at different positions in a structure in which the anchor members engaging with engagement portions extending from a child seat are attached to a seat back frame through an anchor attachment member such as a bracket.

### Means for Solving Problem

According to a vehicle seat of the present invention, the above-described problem is solved by a vehicle seat that places a child seat thereon and includes a fixing mechanism fixing the child seat and a seat back frame supporting the fixing mechanism, wherein the fixing mechanism includes a first anchor member that engages with a first engagement portion extending from the child seat, a second anchor member that engages with a second engagement portion extending from a portion different from the first engagement portion of the child seat and is disposed at a position different from the first anchor member, and an anchor attachment member is a plate-shaped member to which both the first anchor member and the second anchor member are attached, wherein the seat back frame comprises a bent portion formed by bending that includes a facing region facing the anchor attachment member, and supports the fixing mechanism by attaching the anchor attachment member to the facing region, and longitudinal ends of the anchor attachment member extends around a rear side of a flared portions which is formed by bending a front end and the rear end of the side frames that the flared portions toward the side frames is projected inwardly, wherein the longitudinal ends are fixed to the rear ends of the lower ends of the rear end side flared portions of the side frames, meanwhile a portion as an anchor member attachment region is interposed between the longitudinal ends of the anchor attachment member located at the front side of the longitudinal end, and the anchor members are attached to the rear surface of the anchor member attachment region of the anchor attachment member, wherein the second anchor members are bent that an upper portion of the second anchor members is located at the front side of a lower portion of the second anchor members, wherein the anchor attachment member includes the protrusion portion that protrudes upward from the lower side of the second anchor members as to attach the second anchor members, wherein the length of the protrusion portion in the width direction of the vehicle seat is longer than the length of the second anchor members in the width direction, and wherein an upper end of the protrusion portion is located between a lower end of the second anchor members and a bent position of the second anchor members in the up and down direction, and wherein the anchor attachment member as the plate-shaped member, wherein both the first anchor member and the second anchor members are attached to the rear surface of the plate shape member, includes the raised portion that is formed at the rear surface of the plate-shaped member by pressing the plate-shaped member from the front surface side thereof, and wherein a lower end position of at least one anchor member of the first anchor member and the second anchor member is positioned by the raised portion. The improvement compared to the documents JP 2001-105941 A and JP 2003 048467 A is the following. The left anchor member and the right anchor member are fixed to the connection bracket by the above-described positional relation, the support rigidity for the left anchor member and the support rigidity for the right anchor member in the connection bracket are improved, and hence the anchor members and may be more satisfactorily attached to the seat back frame. Further, the connection bracket according to this embodiment includes a raised portion which is formed at the rear surface side by performing a pressing process from the front surface side thereof. Further the lower end position of at least one anchor member is advantageously regulated and positioned by the raised portion.

In the vehicle seat with such a configuration, the plurality of anchor members are attached to different positions of the common anchor attachment member, and the anchor attachment member is attached to the bent portion (more specifically, the facing region in the bent portion) having high rigidity in the seat back frame. Then, the anchor attachment member appropriately supports the plurality of anchor members as a result of the improved rigidity of the attachment portion for the anchor attachment member in the seat back frame. That is, in the vehicle seat of the present invention, the anchor members may be satisfactorily attached to the seat back frame.

Further, in the above-described vehicle seat, the seat back frame may include a pan frame that is located at a rear portion of the seat back frame, the pan frame may include an exposure hole that exposes the first anchor member and an upper hole that is located above the exposure hole, the fixing mechanism may be located at the front side of the pan frame, the first anchor member may engage with the first engagement portion that passes through the upper hole from the front side of the pan frame to the rear side thereof and extends so that the tip thereof is disposed in the exposure hole, and the second anchor member may engage with the second engagement portion that extends from the front side of the second anchor member toward the second anchor member.

In the vehicle seat with the above-described configuration, the first anchor member and the second anchor member may be satisfactorily attached to the seat back frame.

In the above-described vehicle seat, the second anchor member is bent so that an upper portion of the second anchor member is located at the front side of a lower portion of the second anchor member, the anchor attachment member may include a protrusion portion that protrudes upward from the lower side of the second anchor member so as to attach the second anchor member, the length of the protrusion portion in the width direction of the vehicle seat is longer than the length of the second anchor member in the width direction, and an upper end of the protrusion portion is located between a lower end of the second anchor member and a bent position of the second anchor member in the up and down direction.

In the vehicle seat with the above-described configuration, since the support rigidity for the second anchor member in the anchor attachment member is improved, the second anchor member may be more satisfactorily attached to the seat back frame.

In the above-described vehicle seat, the anchor attachment member is a plate-shaped member, both the first anchor member and the second anchor member is attached to a rear surface of the plate-shaped member, the plate-shaped member includes a raised portion that is formed at the rear surface of the plate-shaped member by pressing the plate-shaped member from the front surface side thereof, and a lower end position of at least one anchor member of the first anchor member and the second anchor member is positioned by the raised portion.

In the vehicle seat with the above-described configuration, the lower end position of at least one anchor member may be positioned even when a separate member is not prepared. Further, the rigidity of the anchor attachment member may be improved.

Further, in the above-described vehicle seat, the anchor attachment member may be an elongated plate-shaped member, both the first anchor member and the second anchor member may include joint targets that are joined to the plate-shaped member, the joint targets may be joined to the plate-shaped member so as to be attached to the plate-shaped member, and the joint target of at least one anchor member of the first anchor member and the second anchor member may follow the longitudinal direction of the plate-shaped member.

In the vehicle seat with the above-described configuration, since the joint target may be easily lengthened, at least one anchor member (the anchor member of which the joint target follows the longitudinal direction of the plate-shaped member) may be more satisfactorily attached to the seat back frame.

Further, in the above-described vehicle seat, the at least one anchor member may include an engagement target that engages with the engagement portion corresponding to the at least one anchor member in the first engagement portion and the second engagement portion, and the engagement target may be provided at a position equal to the joint target in the up and down direction in the at least one anchor member.

In the vehicle seat with the above-described configuration, since the engagement target may be easily lengthened, it is possible to stabilize the engagement state between at least one anchor member and the engagement portion corresponding to the anchor member.

### EFFECTS OF THE INVENTION

According to the present invention, it is possible to satisfactorily attach the plurality of anchor members to the seat back frame.

According to the present invention, it is possible to satisfactorily attach the first anchor member and the second anchor member formed so as to engage with the corresponding engagement portions to the seat back frame.

According to the present invention, it is possible to more satisfactorily attach the second anchor member to the seat back frame.

According to the present invention, it is possible to position the lower end position of at least one anchor member even when a separate member is not prepared. Further, it is possible to improve the rigidity of the anchor attachment member.

According to the present invention, since the joint target of at least one anchor member may be easily lengthened, it is possible to more satisfactorily attach the anchor member to the seat back frame.

According to the present invention, since the engagement target of at least one anchor member may be easily lengthened, it is possible to stabilize the engagement state between at least one anchor member and the engagement portion corresponding to the anchor member.

### BRIEF DESCRIPTION OF THE DRAWINGS

Fig. 1 is a perspective view illustrating a vehicle seat according to this embodiment;
Fig. 2A is a perspective view illustrating the inner structure of the vehicle seat according to this embodiment;
Fig. 2B is a view in which the inner structure of the vehicle seat according to this embodiment is seen from the front side and the top side thereof;
Fig. 3 is a view illustrating a fixing mechanism according to this embodiment;
Fig. 4 is a view illustrating an engagement portion and an anchor member according to this embodiment;
Fig. 5 is a view illustrating the positional relation between a fixing mechanism and a seat back frame;
Fig. 6 is an enlarged view of the periphery of a second anchor member according to this embodiment;
Fig. 7 is a (first) view illustrating the anchor member that is attached to an anchor attachment member according to this embodiment; and
Fig. 8 is a (second) view illustrating the anchor member that is attached to the anchor attachment member according to this embodiment.

### DESCRIPTION OF EMBODIMENT

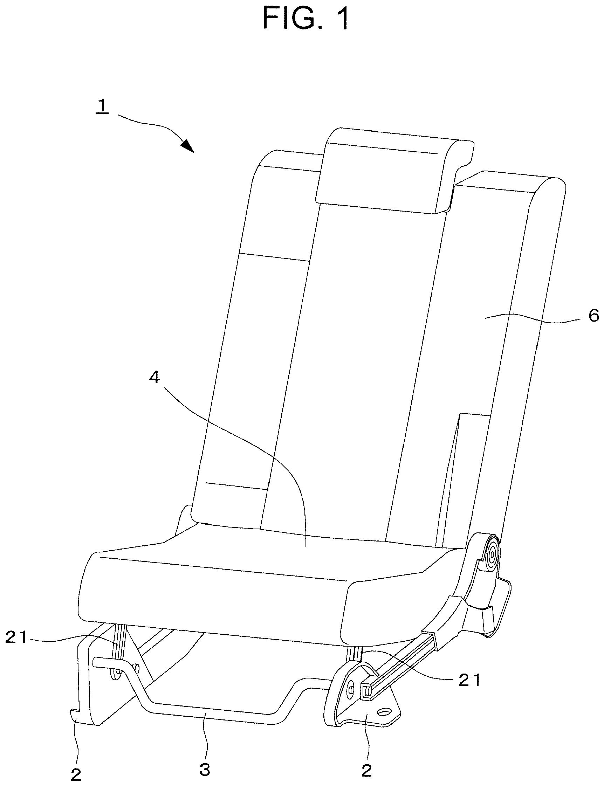

Hereinafter, an embodiment (hereinafter, referred to as this embodiment) of the present invention will be described with reference to Figs. 1 to 8.

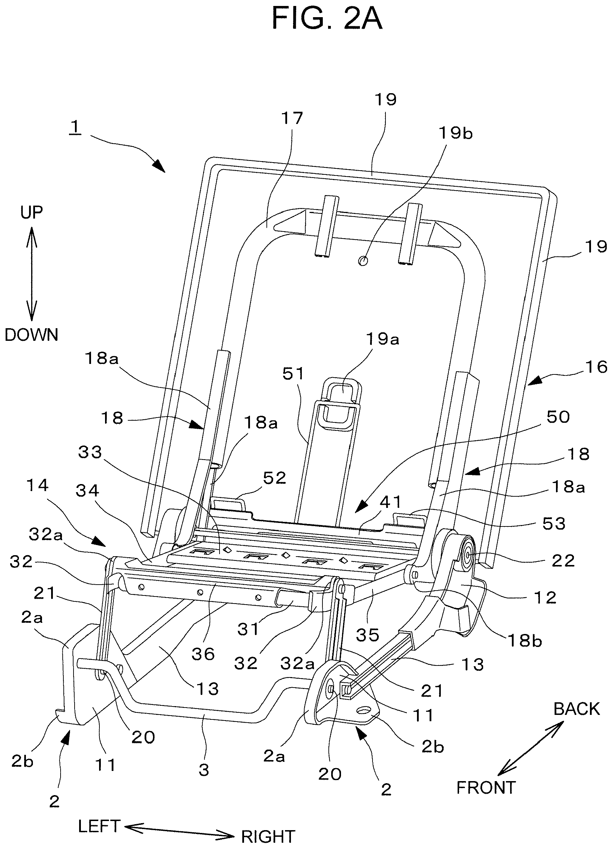

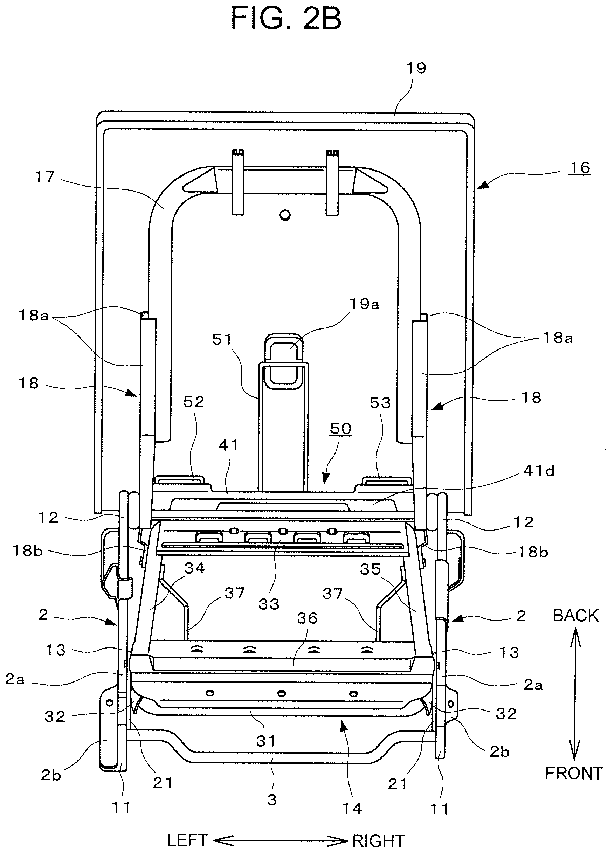

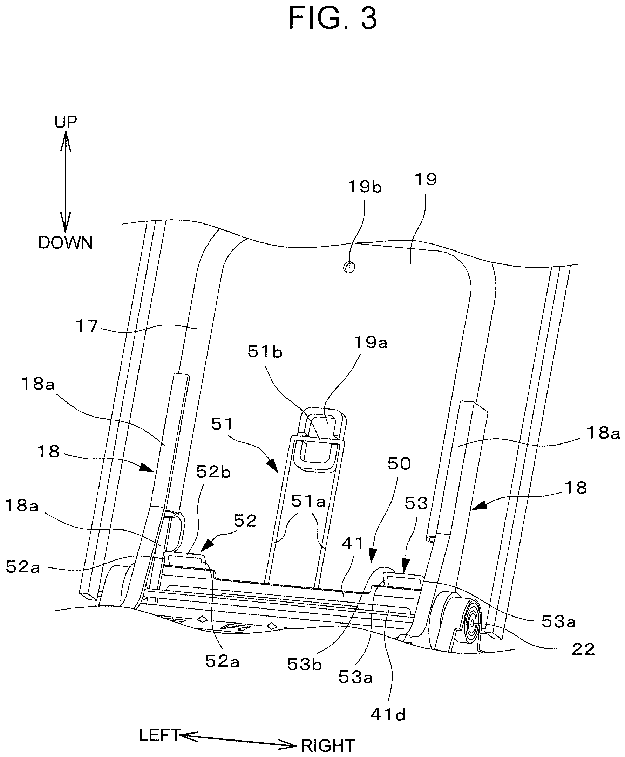

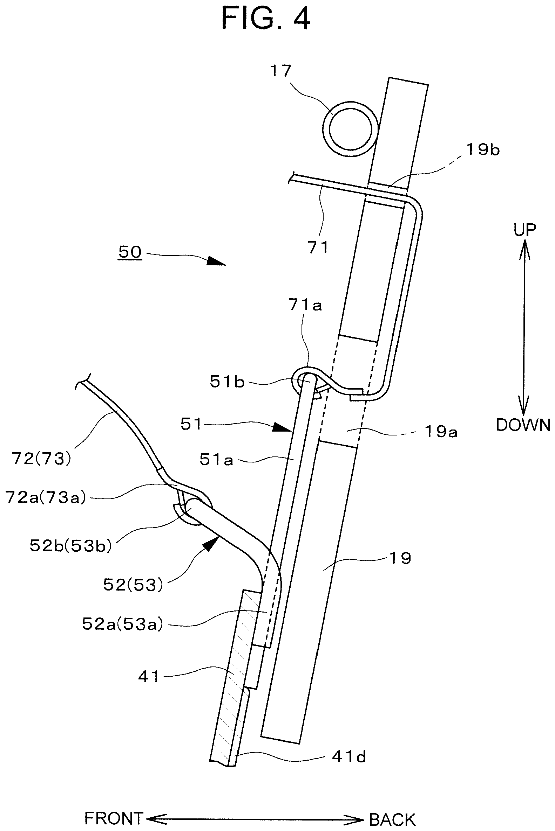

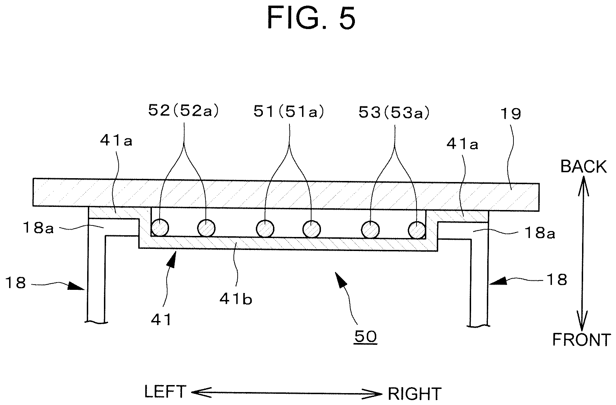

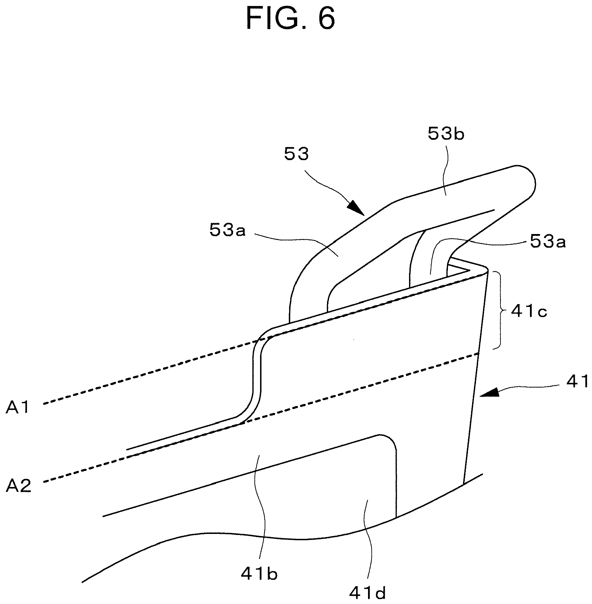

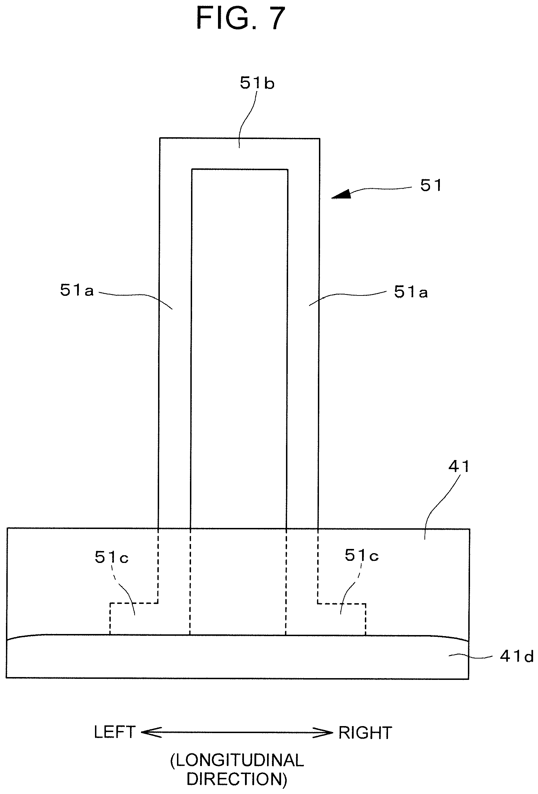

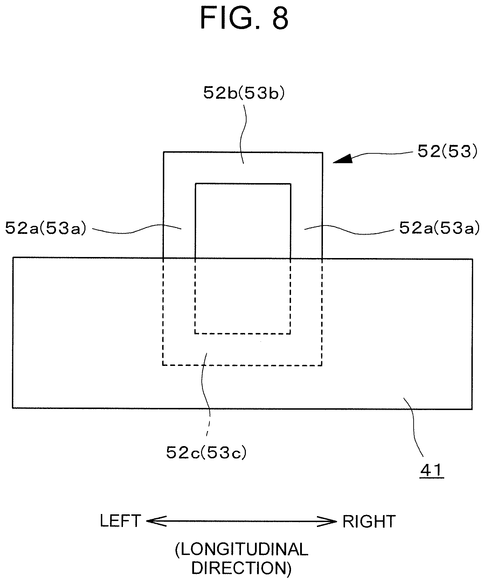

Fig. 1 is a perspective view of a vehicle seat according to this embodiment. Figs. 2A and 2B are views illustrating the inner structure of the vehicle seat according to this embodiment, where Fig. 2A is a perspective view of the inner structure and Fig. 2B is a view in which the inner structure is seen from the front side and the top side thereof. Fig. 3 is a view illustrating a fixing mechanism according to this embodiment. Fig. 4 is a view illustrating an engagement portion and an anchor member according to this embodiment. Fig. 5 is a view illustrating the positional relation between a fixing mechanism and a seat back frame. Fig. 6 is an enlarged view of the periphery of a second anchor member according to this embodiment. Figs. 7 and 8 are views illustrating the anchor member that is attached to an anchor attachment member according to this embodiment.

In the description below, the front to back direction of the vehicle (the vehicle seat) indicates the direction matching the traveling direction when the vehicle travels normally. Further, the width direction of the vehicle (the vehicle seat) indicates the right and left direction when the vehicle (the vehicle seat) is seen from the front side thereof. Further, in the description below, the up and down direction indicates the up and down direction when the vehicle is located on a flat surface.

### «Entire Configuration of Vehicle Seat according to This Embodiment»

First, the entire configuration of the vehicle seat (hereinafter, referred to as a seat 1) according to this embodiment will be described.

The seat 1 is a foldable seat, becomes a posture in which an occupant may sit on the seat in a use state, and becomes a folded posture in a non-use state.

Specifically, the seat 1 includes a seat cushion 4 and a seat back 6 as illustrated in Fig. 1. When the seat back 6 is laid forward from the standing state, the seat cushion 4 swings backward and downward in synchronization with this movement. Then, when the seat cushion 4 reaches the lower end and the rear end of the swing range, the seat back 6 is folded on the seat cushion 4. Such a state is a state (a non-use state) where the seat 1 is stowed.

Meanwhile, when the seat back 6 is returned from the laid state to the standing state, the seat cushion 4 swings forward and upward in synchronization with this movement. Then, when the seat cushion 4 reaches the upper end and the front end of the swing range, the seat cushion 4 is located slightly above a vehicle body floor, and hence the seat back 6 stands so as to be substantially perpendicular to the seat cushion 4. Such a state is a state (a use state) where an occupant may sit on the seat 1.

Further, the seat 1 includes a pair of right and left support brackets 2 and 2, and is fixed to a vehicle body through the support brackets 2 and 2. That is, the pair of right and left support brackets 2 and 2 is a portion which is formed so as to fix the seat 1 to the vehicle body. In this embodiment, the support brackets are formed by performing a pressing work on a metal sheet. Furthermore, in this embodiment, the support brackets 2 and 2 are fixed to the vehicle body while being located at both sides of the seat cushion 4.

Here, the structures of each of the support brackets 2 and 2 will be described with reference to Figs. 2A and 2B, and each of the support brackets 2 and 2 are formed by connecting and matching a plurality of segments. In this embodiment, the support bracket includes a front end 11, a rear end 12, and an intermediate portion 13 which connects the front end 11 and the rear end 12 to each other. In other words, each of the support brackets 2 and 2 may be divided into three segments of the front end 11, the rear end 12, and the intermediate portion 13.

The respective segments (that is, the front end 11, the rear end 12, and the intermediate portion 13) of the support brackets 2 and 2 are provided so as to be substantially perpendicular to the vehicle body floor. Furthermore, in this embodiment, a flared portion 2a which is projected outward is formed in the substantially entire circumference of the support brackets 2 and 2, and the rigidity of the support brackets 2 and 2 is ensured by forming such flared portions 2a.

The rear end 12 of each of the support brackets 2 and 2 is attached to the lower end of the seat back 6 (precisely, a frame (a seat back frame) 16 of the seat back 6). More specifically, the seat back 6 rotates between the standing position (the position where the seat 1 is in a sittable state) and the laid position (the position where the seat 1 is in a stowable state) in a reciprocating manner as described above, and an extension shaft 22 which extends from the outer surface of the seat back frame and serving as a rotation shaft is fitted to a fitting hole formed in the rear end 12.

The front ends 11 of each of the support brackets 2 and 2 are portions which support the seat cushion 4 through rotation arms 21 and 21 to be described later. Further, a substantially horizontal base wall 2b is adjacent to the lower end of the front end 11, and when such a base wall 2b is connected to the vehicle body floor by a bolt, the support brackets 2 and 2 is fixed to the vehicle body. As a result, the seat 1 is fixed to the vehicle body floor.

Furthermore, in this embodiment, the height (the length in the up and down direction) of the front end 11 is slightly larger than the height of the intermediate portion 13 or the rear end 12 located behind the front end 11. Accordingly, it is possible to ensure the rigidity of the front end 11 which receives a load in the support brackets 2 and 2 when the seat 1 is folded.

Further, in this embodiment, a connection pipe 3 which connects the front ends 11 of the support brackets 2 and 2 to each other is provided so as to suppress the support brackets 2 and 2 from falling inward (that is, toward the support brackets 2 and 2 which make a pair).

Next, the seat cushion 4 and the peripheral components will be described with reference to Figs. 2A and 2B. The seat cushion 4 includes a seat cushion frame 14 which is disposed at a position interposed between the support brackets 2 and 2 in the width direction of the vehicle and serves as a frame. The seat cushion frame 14 includes a seat cushion frame base 31, front brackets 32 and 32, and a rear bracket 33. The seat cushion frame base 31 is formed as a pipe which is bent in a substantially U-shape, the left end thereof is provided with a left end frame 34, and the right end thereof is provided with a right end frame 35.

The front brackets 32 and 32 are respectively welded to the front portions of the outer surfaces of the left end frame 34 and the right end frame 35. Each of the front brackets 32 and 32 includes a bulge portion 32a which bulges upward, and one-side longitudinal ends of the rotation arms 21 and 21 to be described later are fixed to the bulge portions 32a.

The rear bracket 33 is disposed between the rear end of the left end frame 34 and the rear end of the right end frame 35 in the width direction of the seat 1.

Further, a seat cushion pan 36 is provided in the front end of the seat cushion frame 14 from the left front bracket 32 to the right front bracket 32, S-shaped springs (not illustrated) are provided between the rear end of the seat cushion pan 36 and the rear bracket 33, and a cushion material of the seat cushion 4 is placed on the S-shaped springs.

Furthermore, the front end of the seat cushion pan 36 is hooked to the front end of the seat cushion frame base 31. Specifically, the front end of the seat cushion pan is curved in a circular-arc shape so as to be hooked to the front end of the seat cushion frame base 31. Meanwhile, the front end of the seat cushion pan 36 is not hooked to a position where a pipe forming the seat cushion frame base 31 is bent, that is, a position corresponding to the front corner of the seat cushion 4. This is because the occupant may feel uncomfortable when the occupant sits on the seat 1 in the case where the seat cushion pan 36 is hooked to the position corresponding to the front corner of the seat cushion 4. With the above-described configuration, the uncomfortable feeling may be suppressed.

Further, an attachment wire 37, to which a trim code attached to a terminal end of a trim cover covering the cushion material is hooked, is provided at the inside of the seat cushion frame base 31 (specifically, a position between the left end frame 34 and the right end frame 35 of the seat cushion frame base 31).

Meanwhile, the rotation arms 21 and 21, which are rotatable about the rotation shaft along the width direction of the vehicle, are provided as a pair of right and left rotation arms in the periphery of the seat cushion frame 14. As described above, the seat cushion frame 14 (specifically, the bulge portions 32a of the front brackets 32 and 32) is fixed to one-side longitudinal ends of each of the rotation arms 21 and 21. As a result, the seat cushion frame 14 swings in synchronization with the rotation of the rotation arms 21 and 21. That is, when the rotation arms 21 and 21 rotate, the seat cushion 4 swings in accordance with the rotation.

The configurations of the rotation arms 21 and 21 will be described. As described above, one-side longitudinal ends of the rotation arms 21 and 21 are fixed to the bulge portions 32a of the front brackets 32 and 32 by bolts. The other-side longitudinal ends of the rotation arms 21 and 21 are rotatably supported by the front ends 11 of the support brackets 2 and 2 through fixed pivots 20 and 20 as the rotation shafts. Thus, each of the rotation arms 21 and 21 are rotatable in the front to back direction and the up and down direction, and hence the seat cushion 4 swings in the same direction in accordance with the rotation.

When the seat cushion 4 reaches the front end and the upper end of the swing range, the seat cushion is located slightly above the vehicle body floor, and hence the occupant may sit on the seat cushion at such a position. That is, the position of the front end and the upper end of the swing range of the seat cushion 4 corresponds to the sitting position of the seat cushion 4. Furthermore, in the state where the seat cushion 4 is located at the sitting position, the rotation arms 21 and 21 are slightly inclined backward with respect to the perpendicular direction, and hence the seat cushion 4 takes a posture in which the front end of the seat cushion is raised in relation to the rear end thereof.

On the other hand, when the seat cushion 4 reaches the rear end and the lower end of the swing range, the seat cushion is stowed so as to approach the vehicle body floor. That is, the positions of the rear end and the lower end of the swing range of the seat cushion 4 correspond to the stowing position of the seat cushion 4. Furthermore, the stowing position is located below the sitting position. In the state where the seat cushion 4 is located at the stowing position, the rotation arms 21 and 21 and the seat cushion frame 14 are substantially horizontal.

As described above, the seat cushion 4 according to this embodiment moves between the sitting position and the stowing position in a reciprocating manner in accordance with the rotation of the rotation arms 21 and 21.

Next, the structure of the seat back 6 will be described with reference to Figs. 2A and 2B. Furthermore, in the description below, the up and down direction of the seat back 6 indicates the up and down direction when the seat back 6 is in the standing state (that is, the seat 1 is in the use state). Similarly, the front to back direction of the seat back 6 indicates the front to back direction when the seat back 6 is in the standing state.

The seat back 6 includes a seat back frame 16 which is connected to the rear end of the seat cushion 4 and serves as a frame. The seat back frame 16 includes a seat back frame base 17, a pair of right and left side frames 18 and 18, and a back pan frame 19. The seat back frame base 17 is formed as a pipe which is bent in a substantially downward U-shape. The side frames 18 and 18 are respectively welded to the left end and the right end of the seat back frame base 17.

The shapes of the side frames 18 and 18 will be described. The above-described extension shafts 22 are uprightly formed on the lower portions of the outer surfaces of the side frames 18 and 18, and the extension shafts 22 are fitted to the fitting holes formed in the rear ends 12 of the support brackets 2 and 2. Accordingly, the seat back 6 may swing about the extension shaft 22 in the front to back direction and the up and down direction.

Further, each of the side frames 18 and 18 includes a flared portion 18a which is formed by bending the front end and the rear end thereof so that the flared portion is projected inward (toward the side frames 18 which make a pair). Since such flared portions 18a are formed, the rigidity of the side frames 18 and 18 is ensured. Further, the front lower ends of the side frames 18 and 18 are provided with bulge portions 18b, and the bulge portions 18b engage with the outer surfaces of the corresponding frames of the left end frame 34 and the right end frame 35.

Furthermore, a connection bracket 41 which connects the lower ends of the side frames 18 and 18 to each other is provided between the side frames 18 and 18. The connection bracket 41 is a plate-shaped member that is elongated in the width direction of the seat 1, and both longitudinal ends thereof are fixed to the rear ends of the lower ends of the side frames 18 and 18 (more specifically, the rear-end-side flared portions 18a). Further, anchor members 51, 52, and 53 are attached to the rear surface of the connection bracket 41 (the surface facing the back pan frame 19), and the anchor members 51, 52, and 53 engage with tether straps 71, 72, and 73 extending from a child seat when the child seat is attached to the seat 1 (for example, see Fig. 4).

The back pan frame 19 is a pan frame which is located at the rear portion of the seat back frame 16, and is formed as a substantially rectangular metal panel in this embodiment. Then, the back pan frame is welded to the rear end of the seat back frame base 17 and the rear ends of the side frames 18 and 18. The width of the back pan frame 19 (the length in the right and left direction) is larger than the width of the seat cushion frame 14 by one size. Then, in the state where the seat 1 is folded, the entire seat cushion 4 is slid below the back pan frame 19.

Further, a rectangular hole 19a is formed at the substantial center position of the width direction of the back pan frame 19 (the lateral direction of the back pan frame 19) and the substantial center position of the height direction (the longitudinal direction of the back pan frame 19). Further, a circular hole 19b is formed at a position slightly above the formation position of the rectangular hole 19a (see Fig. 2A).

### «Regarding Child Seat Fixing Mechanism»

The seat 1 includes the above-described anchor members 51, 52, and 53 in order to fix the child seat. That is, when the child seat is placed on the seat 1 (more specifically, the seat cushion 4), the child seat may be fixed to the seat 1 by the anchor members 51, 52, and 53.

Hereinafter, the child seat fixing mechanism 50 including the anchor members 51, 52, and 53 will be described.

The fixing mechanism 50 is provided in the seat so as to fix the child seat placed on the seat cushion 4, and includes the anchor members 51, 52, and 53 and an anchor attachment member for attaching the anchor members 51, 52, and 53 as illustrated in Figs. 3 to 5. Furthermore, in this embodiment, the anchor attachment member is formed by the connection bracket 41 which connects the lower ends of the side frames 18 and 18 to each other.

The anchor members 51, 52, and 53 engage with the tether straps 71, 72, and 73 which extend from the child seat. The tether straps 71, 72, and 73 correspond to the engagement portions of the present invention, and are generally disposed at different positions of the child seat. In this embodiment, in the state where the child seat is placed on the seat 1, the tether straps 71, 72, and 73 are located at different positions in a direction corresponding to the width direction of the seat 1. In this way, since the arrangement positions of each of the tether straps 71, 72, and 73 are different, the arrangement positions of the anchor members 51, 52, and 53 of the seat 1 are also different in the width direction of the seat 1.

Specifically, one anchor member 51 of the anchor members 51, 52, and 53 is the anchor member (hereinafter, referred to as the center anchor member 51) which is fixed to the connection bracket 41 at the center portion in the width direction of the seat 1, and corresponds to the first anchor member of the present invention. The lower end of the center anchor member 51 is fixed to the rear surface of the connection bracket 41. As illustrated in Fig. 5, the center anchor member is disposed at a position interposed between the connection bracket 41 and the back pan frame 19 in the front to back direction of the seat 1 (that is, a position directly before the back pan frame 19).

Then, the corresponding tether strap (specifically, the first tether strap 71 to be described later) of the tether straps 71, 72, and 73 provided in the child seat engages with a portion located above the connection bracket 41 in the center anchor member 51. Here, the corresponding tether strap indicates the tether strap which is located at the closest position in the state where the child seat is placed on the seat 1.

More specifically, a portion located above the connection bracket 41 in the center anchor member 51 has a substantially downward U-shape as illustrated in Fig. 3, and includes a pair of upward extension portions 51a and 51a which extends upward in the height direction of the back pan frame 19 and a horizontal portion 51b which connects the tips (the upper ends) of the upward extension portions 51a and 51a to each other.

Each of the pair of upward extension portions 51a and 51a extends so that the tip (the upper end) thereof reaches the vicinity of the center position of the back pan frame 19 in the height direction, and the horizontal portion 51b is exposed to the rear side of the back pan frame 19 through the rectangular hole 19a formed in the back pan frame 19. Here, the above-described rectangular hole 19a corresponds to an exposure hole which exposes the center anchor member 51. Meanwhile, the above-described circular hole 19b corresponds to an upper hole which is located above the rectangular hole 19a.

The tether strap 71 (hereinafter, referred to as the first tether strap 71) corresponding to the first engagement portion in the tether straps 71, 72, and 73 provided in the child seat engages with the center anchor member 51 formed as described above. In the state where the child seat is placed on the seat 1, the first tether strap 71 penetrates the upper end of the seat back 6 from the front side of the seat back 6, passes through the circular hole 19b formed in the back pan frame 19 from the front side of the back pan frame 19 to the rear side thereof as illustrated in Fig. 4, and extends so that an engagement hook 71a formed in the tip thereof is disposed in the rectangular hole 19a.

Then, the first tether strap 71 engages with the horizontal portion 51b of the center anchor member 51 from the rear surface side (the back surface side) of the back pan frame 19 through the rectangular hole 19a. That is, the horizontal portion 51b is an engagement target which is provided in the center anchor member 51 so as to engage with the first tether strap 71, and the center anchor member 51 engages with the engagement hook 71a of the first tether strap 71 disposed in the rectangular hole 19a by exposing the horizontal portion 51b through the rectangular hole 19a.

Furthermore, the lower end of the center anchor member 51 is fixed to the connection bracket 41, and in this embodiment, the lower end is bent in an L-shape and extends toward the end of the connection bracket 41 in the longitudinal direction. That is, the lower end of the center anchor member 51 is provided with a joint target 51c which is joined to the connection bracket 41 (for example, see Fig. 7), the center anchor member is attached to the connection bracket 41 in a manner such that the joint target 51c is joined to the connection bracket 41. Then, in this embodiment, the joint target 51c of the center anchor member 51 extends in the longitudinal direction of the connection bracket 41.

The other two anchor members 52 and 53 (that is, the anchor members other than the center anchor member 51) of the anchor members 51, 52, and 53 are fixed to the connection bracket 41 at positions interposing the center anchor member 51 in the width direction of the seat 1. That is, the two anchor members 52 and 53 correspond to the second anchor member of the present invention, and are disposed at positions different from the center anchor member 51 in the width direction of the seat 1. Specifically, the two anchor members 52 and 53 are disposed at positions adjacent to the inner ends of the side frames 18 and 18 (more specifically, the rear-end-side flared portions 18a). Furthermore, in the description below, the anchor member 52 located at the left position is referred to as the left anchor member 52 and the anchor member 53 located at the right position is referred to as the right anchor member 53 among the two anchor members 52 and 53 when the seat 1 is seen from the front side.

Both lower ends of the left anchor member 52 and the right anchor member 53 are fixed to the rear surface of the connection bracket 41, and are disposed at positions interposed between the connection bracket 41 and the back pan frame 19 (that is, positions directly before the back pan frame 19) in the front to back direction of the seat 1. That is, in this embodiment, all anchor members 51, 52, and 53 are provided at the same position in the front to back direction of the seat 1. Accordingly, the seat 1 having a compact size in the same direction is realized.

Then, the corresponding tether straps of the tether straps 71, 72, and 73 provided in the child seat engage with the portions located above the connection bracket 41 in the left anchor member 52 and the right anchor member 53. Specifically, the left anchor member 52 engages with the second tether strap 72 located closest to the left anchor member 52 and the right anchor member 53 engages with the third tether strap 73 located closest to the right anchor member 53 while the child seat is placed on the seat 1.

The left anchor member 52 will be described. The left anchor member 52 is formed in a substantially rectangular shape, and a portion located above the connection bracket 41 is formed in a substantially downward U-shape as illustrated in Fig. 3. Then, the left anchor member includes a pair of upward extension portions 52a and 52a which extends upward and a horizontal portion 52b which connects the tips (the upper ends) of the upward extension portions 52a and 52a to each other.

The pair of upward extension portions 52a and 52a extends so that the tips (the upper ends) are located in the vicinity of the boundary between the seat cushion 4 and the seat back 6. Further, each of the pair of upward extension portions 52a and 52a is bent in a substantial V-shape at the halfway position thereof so that the tip thereof is located at the more front side as illustrated in Fig. 4. That is, the left anchor member 52 is bent (bent forward) so that the upper portion of the left anchor member is located at the front side in relation to the lower portion thereof.

The left anchor member 52 which is formed as described above engages with the second tether strap 72. The second tether strap 72 corresponds to the second engagement portion, and extends from a portion different from the first tether strap 71 in the child seat (specifically, different positions in the width direction of the child seat). Further, the second tether strap 72 is located at the front side of the left anchor member 52 and extends toward the upper end located at the more front side in the left anchor member 52 while the child seat is placed on the seat 1 as illustrated in Fig. 4.

Then, the second tether strap 72 approaches the left anchor member 52 from the front side thereof, and the engagement hook 72a provided at the tip thereof engages with the horizontal portion 52b of the left anchor member 52. That is, the horizontal portion 52b is an engagement target which is provided in the left anchor member 52 so as to engage with the second tether strap 72, and the left anchor member 52 engages with the engagement hook 72a of the second tether strap 72 extending toward the horizontal portion 51b from the front side thereof.

Furthermore, in this embodiment, the left anchor member 52 is formed in an annular shape, and a portion facing the horizontal portion 52b in the lower end thereof corresponds to a joint target 52c joined to the connection bracket 41 (for example, see Fig. 8). The left anchor member 52 is attached to the connection bracket 41 in a manner such that the joint target 52c is joined to the connection bracket 41. That is, in this embodiment, the horizontal portion 52b as the engagement target is provided at a position equal to the joint target 52c in the up and down direction of the left anchor member 52. Then, the horizontal portion 52b and the joint target 52c of the left anchor member 52 extend in the longitudinal direction of the connection bracket 41.

The right anchor member 53 is bilaterally symmetrical to the left anchor member 52, and has substantially the same structure as the left anchor member 52. That is, even the right anchor member 53 includes a pair of upward extension portions 53a and 53a which extends upward and a horizontal portion 53b which connects the tips (the upper ends) of the upward extension portions 51a and 51a to each other as in the left anchor member 52. Further, the right anchor member 53 is also bent (bent forward) so that the upper portion of the right anchor member is located at the front side in relation to the lower portion thereof (see Fig. 4).

As described above, the right anchor member 53 engages with the third tether strap 73. The third tether strap 73 corresponds to the second engagement portion and extends from a portion different from the first tether strap 71 in the child seat (a different portion in the width direction of the child seat and a portion opposite to the second tether strap 72 when seen from the first tether strap 71). Then, the third tether strap 73 approaches the right anchor member 53 from the front side thereof, and the engagement hook 73a provided at the tip thereof engages with the horizontal portion 53b as the engagement target while the child seat is placed on the seat 1.

Furthermore, the right anchor member 53 is also formed in an annular shape, the horizontal portion 53b as the engagement target is provided at the upper end thereof, and a joint target 53c joined to the connection bracket 41 is provided at the lower end facing the horizontal portion 53b (see Fig. 8). Then, even in the right anchor member 53, the horizontal portion 53b is formed at a position equal to the joint target 53c in the up and down direction. Further, the horizontal portion 53b and the joint target 53c of the right anchor member 53 extend in the longitudinal direction of the connection bracket 41.

The connection bracket 41 as the anchor attachment member is fixed to the rear ends of the lower ends of the side frames 18 and 18 in the seat back frame 16 while three anchor members 51, 52, and 53 are attached to the rear surface thereof. That is, all three anchor members 51, 52, and 53 (in other words, both the first anchor member and the second anchor member) are attached to the connection bracket 41, and the connection bracket 41 in such a state is supported by the seat back frame 16. That is, the seat back frame 16 according to this embodiment is used to support the fixing mechanism 50 by fixing the longitudinal ends of the connection bracket 41 to the rear ends of the lower ends of the side frames 18 and 18.

Here, the rear ends of the side frames 18 and 18 are bent so as to ensure the rigidity thereof as described above, and hence the flared portions 18a which are projected inward are formed by the bending work. Each flared portion 18a faces a longitudinal end 41a of the connection bracket 41 (see Fig. 5). That is, each of the side frames 18 and 18 corresponds to the bent portion of the present invention, and the flared portion 18a which is formed by bending the rear end of each of the side frames 18 and 18 corresponds to the facing region of the present invention.

Then, when the longitudinal end 41a of the connection bracket 41 is attached to the flared portion 18a as the facing region, the seat back frame 16 supports the fixing mechanism 50.

As described above, in this embodiment, the anchor members 51, 52, and 53 are attached to a plurality of different positions of the connection bracket 41 as the common anchor attachment member, and the connection bracket 41 is attached to the highly rigid rear ends of the side frames 18 and 18 (more specifically, the rear flared portions 18a) in the seat back frame 16. That is, in this embodiment, the attachment portion of the connection bracket 41 in the seat back frame 16 becomes a portion of which the rigidity is further improved. As a result, the connection bracket 41 appropriately supports the plurality of anchor members 51, 52, and 53, and hence the anchor members 51, 52, and 53 are satisfactorily attached to the seat back frame 16.

Here, the positional relation between the fixing mechanism 50 and the seat back frame 16 will be described. As illustrated in Fig. 5, the connection bracket 41 is bent a plurality of times at the halfway position in the longitudinal direction, and hence the longitudinal end 41a of the connection bracket 41 extends around the rear side of the flared portion 18a provided the rear end of each of the side frames 18 and 18. Meanwhile, a portion other than the longitudinal end 41a (that is, a portion interposed between the longitudinal ends 41a, and hereinafter, referred to as an anchor member attachment region 41b) in the connection bracket 41 is located at the front side of the longitudinal end 41a, and the anchor members 51, 52, and 53 are attached to the rear surface of the anchor member attachment region 41b.

More specifically, the center anchor member 51 is attached to the center portion of the anchor member attachment region 41b in the longitudinal direction of the connection bracket 41. As described above, the lower end of the center anchor member 51 is bent in an L-shape and extends toward the longitudinal end of the connection bracket 41 (see Fig. 7). A portion extending in the longitudinal direction of the connection bracket 41 forms the joint target 51c of the center anchor member 51, and the joint target 51c is joined to the connection bracket 41 so that the center anchor member 51 is attached to the connection bracket 41.

As described above, in this embodiment, the joint target 51c of the center anchor member 51 extends in the longitudinal direction of the connection bracket 41. In this way, when the joint target 51c follows the longitudinal direction of the connection bracket 41, the attachment space for the joint target 51c in the connection bracket 41 has a margin. For this reason, the joint target 51c may be easily lengthened, and hence the center anchor member 51 may be highly satisfactorily attached to the seat back frame 16.

The left anchor member 52 is attached to one end (the left end) of the anchor member attachment region 41b in the longitudinal direction of the connection bracket 41. Similarly, the right anchor member 53 is attached to the other end (the right end) of the anchor member attachment region 41b in the longitudinal direction of the connection bracket 41. Here, the structure of the end of the anchor member attachment region 41b will be described. As illustrated in Fig. 6, a protrusion portion 41c is formed so as to protrude toward the upside of the center portion (for example, the attachment region of the center anchor member 51). The protrusion portion 41c is a portion which is provided in the connection bracket 41 so as to attach the above-described anchor member (specifically, the left anchor member 52 or the right anchor member 53) corresponding to the second anchor member.

Then, in this embodiment, the above-described anchor members 52 and 53 are attached to the connection bracket 41 in a manner such that the joint targets 52c and 53c respectively provided at the lower portions of the left anchor member 52 and the right anchor member 53 are joined between the lower end (the position indicated by the sign A2 of Fig. 6) and the upper end (the position indicated by the sign A1 of Fig. 6) of the protrusion portion 41c. That is, the protrusion portions 41c protrude upward from the lower sides of the anchor members 52 and 53 while the anchor members 52 and 53 corresponding to the second anchor member are fixed to the connection bracket 41.

Further, as illustrated in Fig. 6, the length of the protrusion portion 41c in the width direction of the seat 1 is longer than the lengths of the anchor members 52 and 53 corresponding to the second anchor member in the same direction. That is, the anchor members 52 and 53 corresponding to the second anchor member are fixed to the connection bracket 41 so that both left and right ends thereof are located between the left and right ends of the protrusion portion 41c.

Further, in the state where the anchor members 52 and 53 corresponding to the second anchor member are fixed to the connection bracket 41, the upper end of the protrusion portion 41c is located between the lower end of each of the anchor members 52 and 53 and the bent position of each of the anchor members 52 and 53 in the up and down direction.

Since the left anchor member 52 and the right anchor member 53 are fixed to the connection bracket 41 by the above-described positional relation, the support rigidity for the left anchor member 52 and the support rigidity for the right anchor member 53 in the connection bracket 41 are improved in this embodiment, and hence the anchor members 52 and 53 may be more satisfactorily attached to the seat back frame 16.

Furthermore, in this embodiment, the protrusion portion 41c is formed so as to be lengthened in the longitudinal direction of the connection bracket 41. Meanwhile, each of the joint targets 52c and 53c of the left anchor member 52 and the right anchor member 53 are joined to the rear surfaces of the protrusion portions 41c while the extension direction thereof follows the longitudinal direction of the connection bracket 41. In this way, when the joint targets 52c and 53c follow the longitudinal direction of the connection bracket 41, there is a margin in the attachment space (specifically, the protrusion portion 41c) of the joint target 52c in the connection bracket 41. Accordingly, the above-described joint targets 52c and 53c may be easily lengthened, and hence the left anchor member 52 and the right anchor member 53 may be highly satisfactorily attached to the seat back frame 16.

Further, the connection bracket 41 according to this embodiment includes a raised portion 41d which is formed at the rear surface side by performing a pressing process (a pressing work) from the front surface side thereof (for example, see Fig. 2B, 3, and 4). The raised portion 41d is located at the halfway position of the connection bracket 41 in the height direction, and is formed from the arrival position of the left protrusion portion 41c to the arrival position of the right protrusion portion 41c in the longitudinal direction of the connection bracket 41. Since the raised portion 41d is formed, the rigidity of the connection bracket 41 is improved. As a result, the connection bracket 41 more appropriately supports the plurality of anchor members 51, 52, and 53.

Further, in this embodiment, the lower end position of the center anchor member 51 is defined by the above-described raised portion 41d. More specifically, the above-described raised portion 41d is raised from the rear surface of the connection bracket 41 (see Fig. 4), and is formed in the longitudinal direction of the connection bracket 41. When the lower end of the center anchor member 51 (specifically, the joint target 51c) comes into contact with such a raised portion 41d, the lower end position of the center anchor member 51 is regulated and positioned by the raised portion 41d.

As described above, in this embodiment, since the raised portion 41d formed in the connection bracket 41 serves as a positioning portion with respect to the anchor member (specifically, the center anchor member 51), the lower end position of the anchor member may be positioned without preparing a separate member. Furthermore, in this embodiment, the lower end position of the center anchor member 51 is positioned by the raised portion 41d. However, the raised portion 41d may position the lower end position of at least any anchor member (in other words, at least one anchor member of the first anchor member and the second anchor member) of the above-described three anchor members 51, 52, and 53.

For example, in the above-described embodiment, the vehicle seat with three anchor members 51, 52, and 53 has been described, but the number of the anchor members may be freely set as long as at least two anchor members are provided.

Further, in the above-described embodiment, the anchor member 51 has been described as an example of the first anchor member that engages with the tether strap (that is, the first tether strap 71) which passes through the circular hole 19b formed in the back pan frame 19 from the front side of the frame to the rear side thereof and extends so that the tip thereof is disposed in the rectangular hole 19a. Meanwhile, the anchor members 52 and 53 have been described as an example of the second anchor member that engages with the tether straps (that is, the second tether strap 72 and the third tether strap 73) extending from the front side thereof. Then, in the vehicle seat (that is, the seat 1) according to the above-described embodiment, the first anchor member and the second anchor member above-described may be satisfactorily attached to the seat back frame 16.

Here, the above-described anchor member is merely an example, and may be an anchor member having the other structure. For example, an anchor member that engages with a fixed arm instead of the tether strap may be also employed.

Further, in the above-described embodiment, each of the anchor members 51, 52, and 53 include the joint targets 51c, 52c, and 53c joined to the connection bracket 41, and the joint targets 51c, 52c, and 53c are joined to the connection bracket 41 so as to be attached to the connection bracket 41. Then, in the above-described embodiment, all joint targets 51c, 52c, and 53c of each of the anchor members 51, 52, and 53 follow the longitudinal direction of the connection bracket 41. However, the present invention is not limited thereto. For example, the joint target of at least one anchor member of the anchor member (the center anchor member 51) corresponding to the first anchor member and the anchor member (the left anchor member 52 and the right anchor member 53) corresponding to the second anchor member may follow the longitudinal direction of the connection bracket 41.

Further, in the above-described embodiment, the anchor member (the left anchor member 52 or the right anchor member 53) corresponding to the second anchor member is formed in an annular shape, and the above-described joint targets 52c and 53c and the engagement targets (specifically, the horizontal portions 52b and 53b) engaging with the engagement portion of the child seat are arranged in series in the up and down direction. Such a configuration is not limited to the anchor member corresponding to the second anchor member, and may be also applied to the anchor member (the center anchor member 51) corresponding to the first anchor member. That is, the engagement target may be provided at a position equal to the joint target in the up and down direction in at least one anchor member of the anchor member corresponding to the first anchor member and the anchor member corresponding to the second anchor member.

### Reference Signs List

- 1: seat
- 2: support bracket
- 2a: flared portion
- 2b: base wall
- 3: connection pipe
- 4: seat cushion
- 6: seat back
- 11: front end
- 12: rear end
- 13: intermediate portion
- 14: seat cushion frame
- 16: seat back frame
- 17: seat back frame base
- 18: side frame
- 18a: flared portion
- 18b: bulge portion
- 19: back pan frame
- 19a: rectangular hole
- 19b: circular hole
- 20: fixed pivot
- 21: rotation arm
- 22: extension shaft
- 31: seat cushion frame base
- 32: front bracket
- 32a: bulge portion
- 33: rear bracket
- 34: left end frame
- 35: right end frame
- 36: seat cushion pan
- 37: attachment wire
- 41: connection bracket
- 41a: longitudinal end
- 41b: anchor member attachment region
- 41c: protrusion portion
- 41d: raised portion
- 50: fixing mechanism
- 51: anchor member (center anchor member)
- 51a: upward extension portion
- 51b: horizontal portion
- 51c: joint target
- 52: anchor member (left anchor member)
- 52a: upward extension portion
- 52b: horizontal portion
- 52c: joint target
- 53: anchor member (right anchor member)
- 53a: upward extension portion
- 53b: horizontal portion
- 53c: joint target
- 71: tether strap (first tether strap)
- 71a: engagement hook
- 72: tether strap (second tether strap)
- 72a: engagement hook
- 73: tether strap
- 73a: engagement hook

## Claims

1. Fixing mechanism that fixes a child seat to a vehicle seat, and
• a seat back frame that supports the fixing mechanism (50),
• wherein the fixing mechanism (50) includes a first anchor member (51) of the vehicle seat that is adapted to engage with a first engagement portion (71) extending from the child seat,
• and second anchor members (52, 53) of the vehicle seat that is adapted to engage with second engagement portions (72, 73) extending from a portion different from the first engagement portion (71) of the child seat and is disposed at a position different from the first anchor member (51), and
**characterized in that**,
• an anchor attachment member (41) is a plate-shaped member to which the first anchor member (51) and the second anchor members (52, 53) are attached,
• wherein the seat back frame (16) comprises a bent portion formed by bending that includes a facing region facing the anchor attachment member (41), and supports the fixing mechanism (50) by attaching the anchor attachment member (41) to the facing region,
• wherein longitudinal ends (41a) of the anchor attachment member (41) extends around a rear side of a flared portions (18a) which is formed by bending a front end and the rear end of the side frames (18) that the flared portions (18a) toward the side frames (18) is projected inwardly,
• wherein the longitudinal ends (41a) are fixed to the rear ends of the lower ends of the rear end side flared portions (18a) of the side frames (18),
• meanwhile a portion as an anchor member attachment region (41b) is interposed between the longitudinal ends (41a) of the anchor attachment member (41) located at the front side of the longitudinal end (41a), and the anchor members (51, 52, 53) are attached to the rear surface of the anchor member attachment region (41b) of the anchor attachment member (41),
• wherein the second anchor members (52, 53) are bent that an upper portion of the second anchor members (52, 53) is located at the front side of a lower portion of the second anchor members (52, 53),
• wherein the anchor attachment member (41) includes a protrusion portion (41c) that protrudes upward from the lower side of the second anchor members (52, 53) as to attach the second anchor members (52, 53),
• wherein the length of the protrusion portion (41c) in the width direction of the vehicle seat is longer than the length of the second anchor members (52, 53) in the width direction, and
• wherein an upper end of the protrusion portion (41c) is located between a lower end of the second anchor members (52, 53) and a bent position of the second anchor members (52, 53) in the up and down direction, and
• wherein the anchor attachment member (41) is a plate-shaped member, wherein both the first anchor member (51) and the second anchor members (52, 53) are attached to the rear surface of the plate-shaped member, which includes a raised portion (41d) that is formed at the rear surface of the plate-shaped member by pressing the plate-shaped member from the front surface side thereof, and
• wherein a lower end position of at least one anchor member of the first anchor member (51) and the second anchor member (52, 53) is positioned by the raised portion (41d).

2. Fixing mechanism according to claim 1,
• wherein the seat back frame includes a back pan frame (19) that is located at a rear portion of the seat back frame (16),
• wherein the back pan frame (19) includes an exposure hole that exposes the first anchor member (51) and an upper hole that is located above the exposure hole,
• wherein the fixing mechanism (50) is located at the front side of the back pan frame (19),
• wherein the first anchor member (51) engages with the first engagement portion that passes through the upper hole from the front side of the back pan frame (19) to the rear side thereof and extends that the tip thereof is disposed in the exposure hole, and
• wherein the second anchors (52, 53) member engages with the second engagement portion that extends from the front side of the second anchor members (52, 53) toward the second anchor member (52, 53).

3. Fixing mechanism according to any one of claims 1 to 2,
• wherein the anchor attachment member (41) is an elongated plate-shaped member,
• wherein both the first anchor member (51) and the second anchor members (52, 53) include joint targets (51c, 52c, 53c) that are joined to the plate-shaped member, and the joint targets (51c, 52c, 53c) are joined to the plate-shaped member as to be attached to the plate-shaped member, and
• wherein the joint targets (52c, 53c) of at least one anchor member of the first anchor (51) member and the second anchor members (52, 53) is located along a longitudinal direction of the plate-shaped member.

4. Fixing mechanism according to claim 3,
• wherein the at least one anchor member (51, 52, 53) includes an engagement target that engages with the engagement portion corresponding to the at least one anchor member (51) of the first engagement (71) portion and the second engagement portions (72, 73, and
• wherein the engagement target is provided at a position equal to the joint target (51c, 52c, 53c) in the up and down direction in the at least one anchor member (51, 52, 53).

## Patentansprüche

1. Fixierungsmechanismus, der einen Kindersitz an einen Fahrzeugsitz fixiert, und
- einen Sitzlehnenrahmen, der den Fixierungsmechanismus (50) stützt,
- wobei der Fixierungsmechanismus (50) ein erstes Ankerelememt (51) des Fahrzeugsitzes einschließt, das ausgelegt ist, um mit einem ersten Eingriffsabschnitt (71) einzugreifen, der sich vom Kindersitz erstreckt,
- und zweite Ankerelemente (52, 53) des Fahrzeugsitzes, die ausgelegt sind, um mit zweiten Eingriffsabschnitten (72, 73) einzugreifen, die sich von einem Abschnitt erstrecken, der verschieden vom ersten Eingriffsabschnitt (71) des Kindersitzes ist und an einer Position angeordnet ist, die verschieden vom ersten Ankerelement (51) ist, und
**dadurch gekennzeichnet, dass**
- ein Ankerbefestigungselement (41) ein plattenförmiges Element ist, an das das erste Ankerelement (51) und das zweite Ankerelement (52, 53) befestigt sind,
- wobei der Sitzlehnenrahmen (16) einen gebogenen Abschnitt umfasst, der durch Biegen gebildet ist, der eine gegenüberliegende Region einschließt, die dem Ankerbefestigungselement (41) gegenüberliegt, und den Fixierungsmechanismus (50) durch Befestigen des Ankerbefestigungselements (41) an die gegenüberliegende Region stützt,
- wobei sich längliche Enden (41a) des Ankerbefestigungselements (41) um eine hintere Seite eines aufgeweiteten Abschnitts (18a) erstrecken, der durch Biegen eines vorderen Endes und des hinteren Endes der Seitenrahmen (18) gebildet ist, so dass der aufgeweitete Abschnitt (18a) hin zu den Seitenrahmen (18) nach innen projiziert wird,
- wobei die länglichen Enden (41a) an die hinteren Enden der unteren Enden der hinteren Endseite von aufgeweiteten Abschnitten (18a) der Seitenrahmen (18) fixiert sind,
- unterdessen ein Abschnitt als eine Ankerelement-Befestigungsregion (41b) zwischen die länglichen Enden (41a) des Ankerbefestigungselements (41) eingefügt wird, das sich an der vorderen Seite des länglichen Endes (41a) befindet, und die Ankerelemente (51, 52, 53) an der hinteren Fläche der Ankerelement-Befestigungsregion (41b) des Ankerbefestigungselements (41) befestigt sind,
- wobei die zweiten Ankerelemente (52, 53) gebogen sind, so dass sich ein oberer Abschnitt der zweiten Ankerlelemente (52, 52) an der vorderen Seite eines unteren Abschnitts der zweiten Ankerelemente (52, 53) befindet,
- wobei das Ankerbefestigungselement (41) einen Vorsprungsabschnitt (41c) einschließt, der nach oben von der unteren Seite des zweiten Ankerelements (52, 53) vorspringt, um die zweiten Ankerelemente (52, 53) zu befestigen,
- wobei die Länge des Vorsprungsabschnitts (41c) in der Breitenrichtung des Fahrzeugsitzes länger als die Länge der zweiten Ankerelemente (52, 53) in der Breitenrichtung ist, und
- wobei sich ein oberes Ende des Vorsprungsabschnitts (41c) zwischen einem unteren Ende der zweiten Ankerelemente (52, 53) und einer gebogenen Position der zweiten Ankerelemente (52, 53) in der Richtung nach oben und unten befindet, und
- wobei das Ankerbefestigungselement (41) ein plattenförmiges Element ist, wobei sowohl das erste Ankerelement (51) als auch die zweiten Ankerelemente (52, 53) an die hintere Fläche des plattenförmigen Elements befestigt sind, das einen angehobenen Abschnitt (41d) umfasst, der an der hinteren Fläche des plattenförmigen Elements durch Drücken des plattenförmigen Elements von der Seite der vorderen Fläche davon gebildet ist, und
- wobei eine untere Endposition von mindestens einem Ankerelement des ersten Ankerelements (51) und des zweiten Ankerelements (52, 53) durch den angehobenen Abschnitt (41d) positioniert ist.

2. Fixierungsmechanismus nach Anspruch 1,
- wobei der Sitzlehnenrahmen einen Lehnenpfannenrahmen (19) einschließt, der sich an einer hinteren Position des Sitzlehnenrahmens (16) befindet,
- wobei der Lehnenpfannenrahmen (19) ein Aussetzungsloch einschließt, das das erste Ankerelement (51) aussetzt, und ein oberes Loch, das sich über dem Aussetzungsloch befindet,
- wobei sich der Fixierungsmechanismus (50) an der vorderen Seite des Lehnenpfannenrahmens (19) angeordnet ist,
- wobei das erste Ankerelement (51) mit dem ersten Eingriffsabschnitt eingreift, der durch das obere Loch von der vorderen Seite des Lehnenpfannenrahmens (19) zur hinteren Seite davon passiert und sich erstreckt, so dass die Spitze davon im Aussetzungsloch angeordnet ist, und
- wobei die zweiten Ankerelemente (52, 53) mit dem zweiten Eingriffsabschnitt eingreifen, der sich von der vorderen Seite der zweiten Ankerelemente (52, 53) hin zum zweiten Ankerelement (52, 53) erstreckt.

3. Fixierungsmechanismus nach einem der Ansprüche 1 bis 2,
- wobei das Ankerbefestigungselement (41) ein verlängertes plattenförmiges Element ist,
- wobei sowohl das erste Ankerelement (51) als auch die zweiten Ankerelemente (52, 53) Verbindungsziele (51c, 52c, 53c) einschließen, die mit dem plattenförmigen Element verbunden sind, und die verbundenen Ziele (51c, 52c, 53c) mit dem plattenförmigen Element verbunden sind, um mit dem plattenförmigen Element verbunden zu sein, und
- wobei sich die Verbindungsziele (52c, 53c) von mindestens einem Ankerelement des ersten Ankerelements (51) und der zweiten Ankerelemente (52, 53) entlang einer Längsrichtung des plattenförmigen Elements befinden.

4. Fixierungsmechanismus nach Anspruch 3,
- wobei das mindestens eine Ankerelement (51, 52, 53) ein Eingriffsziel einschließt, das mit dem Eingriffsabschnitt eingreift, das mindestens dem einen Ankerelement (51) des ersten Eingriffsabschnitts (71) und den zweiten Eingriffsabschnitten (72, 73) entspricht, und
- wobei das Eingriffsziel an einer Position gleich dem Verbindungsziel (51c, 52c, 53c) in der Richtung nach oben und unten im dem mindestens einen Ankerelement (51, 52, 53) bereitgestellt ist.

## Revendications

1. Mécanisme de fixation qui fixe un siège pour enfant sur un siège de véhicule, et
un bâti de dossier qui supporte le mécanisme de fixation (50),
dans lequel le mécanisme de fixation (50) comprend un premier élément d'ancrage (51) du siège de véhicule qui est adapté pour se mettre en prise avec une première partie de mise en prise (71) s'étendant à partir du siège pour enfant,
et des seconds éléments d'ancrage (52, 53) du siège de véhicule qui sont adaptés pour se mettre en prise avec des secondes parties de mise en prise (72, 73) s'étendant à partir d'une partie différente de la première partie de mise en prise (71) du siège pour enfant et sont disposés dans une position différente du premier élément d'ancrage (51), et
**caractérisé en ce que** :
un élément de fixation d'ancrage (41) est un élément en forme de plaque auquel le premier élément d'ancrage (51) et les seconds éléments d'ancrage (52, 53) sont fixés,
dans lequel le bâti de dossier (16) comprend une partie pliée formée par pliage, qui comprend une région de face faisant face à l'élément de fixation d'ancrage (41), et supporte le mécanisme de fixation (50) en fixant l'élément de fixation d'ancrage (41) sur la région de face,
dans lequel les extrémités longitudinales (41a) de l'élément de fixation d'ancrage (41) s'étend autour d'un côté arrière d'une partie évasée (18a) qui est formée en pliant une extrémité avant et l'extrémité arrière des bâtis latéraux (18) de sorte que les parties évasées (18a) vers les bâtis latéraux (18) font saillie vers l'intérieur,
dans lequel les extrémités longitudinales (41a) sont fixées sur les extrémités arrière des extrémités inférieures des parties évasées du côté de l'extrémité arrière (18a) des bâtis latéraux (18),
pendant ce temps, une partie en tant que région de fixation d'élément d'ancrage (41b) est intercalée entre les extrémités longitudinales (41a) de l'élément de fixation d'ancrage (41) positionné au niveau du côté avant de l'extrémité longitudinale (41a), et les éléments d'ancrage (51, 52, 53) sont fixés sur la surface arrière de la région de fixation d'élément d'ancrage (41b) de l'élément de fixation d'ancrage (41),
dans lequel les seconds éléments d'ancrage (52, 53) sont pliés de sorte qu'une partie supérieure des seconds éléments d'ancrage (52, 53) est positionnée au niveau du côté avant d'une partie inférieure des seconds éléments d'ancrage (52, 53),
dans lequel l'élément de fixation d'ancrage (41) comprend une partie de saillie (41c) qui fait saillie vers le haut à partir du côté inférieur des seconds éléments d'ancrage (52, 53) afin de fixer les seconds éléments d'ancrage (52, 53),
dans lequel la longueur de la partie de saillie (41c) dans le sens de la largeur du siège du véhicule, est plus longue que la longueur des seconds éléments d'ancrage (52, 53) dans le sens de la largeur, et
dans lequel une extrémité supérieure de la partie de saillie (41c) est positionnée entre une extrémité inférieure des seconds éléments d'ancrage (52, 53) et une position pliée des seconds éléments d'ancrage (52, 53) dans la direction ascendante et descendante, et
dans lequel l'élément de fixation d'ancrage (41) est un élément en forme de plaque, dans lequel à la fois le premier élément d'ancrage (51) et les seconds éléments d'ancrage (52, 53) sont fixés sur la surface arrière de l'élément en forme de plaque, qui comprend :
une partie relevée (41d) qui est formée au niveau de la surface arrière de l'élément en forme de plaque en comprimant l'élément en forme de plaque à partir de son côté de surface avant, et
dans lequel une position d'extrémité inférieure d'au moins un élément d'ancrage parmi le premier élément d'ancrage (51) et le second élément d'ancrage (52, 53), est positionnée par la partie relevée (41d).

2. Mécanisme de fixation selon la revendication 1,
dans lequel le bâti de dossier comprend un bâti de coque de dossier (19) qui est positionné au niveau d'une partie arrière du bâti de dossier (16),
dans lequel le bâti de coque de dossier (19) comprend un trou d'exposition qui expose le premier élément d'ancrage (51) et un trou supérieur qui est positionné au-dessus du trou d'exposition,
dans lequel le mécanisme de fixation (50) est positionné au niveau du côté avant du bâti de coque de dossier (19),
dans lequel le premier élément d'ancrage (51) se met en prise avec la première partie de mise en prise qui passe par le trou supérieur à partir du côté avant du bâti de coque de dossier (19) jusqu'à son côté arrière et s'étend de sorte que sa pointe est disposée dans le trou d'exposition, et
dans lequel le second élément d'ancrage (52, 53) se met en prise avec la seconde partie de mise en prise qui s'étend à partir du côté avant des seconds éléments d'ancrage (52, 53) vers le second élément d'ancrage (52, 53).

3. Mécanisme de fixation selon l'une quelconque des revendications 1 à 2,
dans lequel l'élément de fixation d'ancrage (41) est un élément en forme de plaque allongé,
dans lequel, à la fois le premier élément d'ancrage (51) et les seconds éléments d'ancrage (52, 53) comprennent des cibles de joint (51c, 52c, 53c) qui sont assemblées à l'élément en forme de plaque, et les cibles de joint (51c, 52c, 53c) sont assemblées à l'élément en forme de plaque afin d'être fixés sur l'élément en forme de plaque, et
dans lequel les cibles de joint (52c, 53c) d'au moins un élément d'ancrage du premier élément d'ancrage (51) et des seconds éléments d'ancrage (52, 53) sont positionnées le long d'une direction longitudinale de l'élément en forme de plaque.

4. Mécanisme de fixation selon la revendication 3,
dans lequel le au moins un élément d'ancrage (51, 52, 53) comprend une cible de mise en prise qui se met en prise avec la partie de mise en prise correspondant au au moins un élément d'ancrage (51) de la première partie de mise en prise (71) et des secondes parties de mise en prise (72, 73), et
dans lequel la cible de mise en prise est prévue dans une position égale à la cible de joint (51c, 52c, 53c) dans la direction ascendante et descendante dans le au moins un élément d'ancrage (51, 52, 53).
